(19) Europäisches Patentamt
European Patent Office
Office européen des brevets

(11) Publication number: **0 404 969 B1**

(12) # EUROPEAN PATENT SPECIFICATION

(45) Date of publication of patent specification: **28.12.94**

(51) Int. Cl.5: **B32B 27/32**, B65D 65/40

(21) Application number: **89111567.7**

(22) Date of filing: **24.06.89**

The file contains technical information submitted after the application was filed and not included in this specification

(54) **Multilayered film.**

(43) Date of publication of application:
**02.01.91 Bulletin 91/01**

(45) Publication of the grant of the patent:
**28.12.94 Bulletin 94/52**

(84) Designated Contracting States:
**AT BE CH DE ES FR GB GR IT LI NL**

(56) References cited:
**EP-A- 0 229 715**
**EP-A- 0 243 965**
**US-A- 4 424 243**

(73) Proprietor: **THE DOW CHEMICAL COMPANY**
**2030 Dow Center**
**Abbott Road**
**P.O. Box 1967**
**Midland**
**Michigan 48640-1967 (US)**

(72) Inventor: **Murphy, Mark**
**407, Daffodil**
**Lake Jackson, Texas 77566 (US)**
Inventor: **Jennergren, Bengt Carl Gustav**
**Majviksgatan 19**
**SE-603 64 Norrkoping (SE)**

(74) Representative: **Sternagel, Hans-Günther, Dr. et al**
**Patentanwälte Dr. Michael Hann**
**Dr. H.-G. Sternagel**
**Sander Aue 30**
**D-51465 Bergisch Gladbach (DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to a coextruded cast multilayered film having a base layer and at least one surface layer, to a process of producing the multilayered film and to the use of the multilayered film for wrapping food.

### Background of the Invention

Films which are used for wrapping food such as vegetables, meat or fish have to meet a number of requirements, among others a good puncture resistance and a good elastic recovery. Polyvinylchloride (PVC) films meet these requirements and have been used in the past to a great extent for wrapping food. However, due to the increasing environmental concerns about the extended use of PVC films the skilled artisans have tried to replace PVC films, with other films having similar properties but causing less environmental concerns. Much research effort has been spent on ethylene homo- or copolymers or mixtures of these polymers with other polymers.

The abstract of JP-A-61200142 discloses a composition which is composed of 80 to 99.9 weight percent of polyolefin resin containing ethylene/ acrylic copolymer as essential component and 20 to 0.1 weight percent of a water-absorbable resin of polyacrylic acids. The polyolefin is for example polyethylene, an ethylene/vinyl acetate copolymer, an ethylene/acrylic acid copolymer or polypropylene. The ethylene/acrylic copolymer is for example an ethylene/acrylic acid copolymer or an ionic copolymer thereof. Evidently a monolayered film is made from this resin composition of which the essential property is said to be its excellent water-adsorbability.

The abstract of JP-A-61083038 discloses a multilayered bag which has an inner layer of a polyolefinic resin and an anti-fogging agent. It is disclosed that each layer can be produced of a polyolefin resin such as polyethylene, polypropylene, an ethylene/vinyl acetate polymer, an ethylene/acrylic acid copolymer etc. Unfortunately, the disclosed teaching is so broad and unspecific with respect to the polymers in the multilayered film that the skilled artisan does not learn what type of polymer are to be selected in order to produce a film having the desired properties.

US-A-4,277,578 relates to heat shrinkable packaging films from polyolefin blends. The blends consist of an ethylene/alpha-olefin copolymer with a density of up to 0.91 g/cm$^3$ with a polymer (a) and/or (c). Polymer (a) is a low density polyethylene and/or a copolymer of ethylene with a vinylester, with an unsaturated aliphatic monocarboxylic acid such as acrylic acid or with its alkyl ester and polymer (c) is a crystalline polypropylene, a high density polyethylene and/or crystalline polybutene-1. US-A-4,277,578 teaches that a film of poor dimensional stability is obtained when the amount of polymers (c) is below a certain level and that such a film tends to undergo deterioration by aging.

US-A-4,619,859 discloses a multilayered oriented film of good sealability and stretchability having at least three layers, preferably five layers. It contains a base layer which consists of a mixture of an ethylene type polymer and a soft elastomer, a core layer produced of polypropylene and polybutene-1 and a surface layer containing an ethylene type polymer, a soft elastomer, crystalline 1,2-polybutadiene and/or a soft ionomer resin from an ethylenic copolymer. The ethylene type polymer is selected from a low density polyethylene, a copolymer of ethylene with a vinyl ester monomer, an aliphatic unsaturated monocarboxylic acid or with an alkyl ester of that monocarboxylic acid. Instead or in addition to the ethylene type polymer the base layer may contain a crystalline polypropylene or a crystalline polybutene-1 for improving the strength and the workability of the film. Unfortunately, the production of the multilayered oriented film which contains at least three different layers and wherein at least one of the layers contains a mixture of various types of polymers is labour intensive and the film structure is complicated. For example, the preparation of the mixtures by kneading and extrusion requires expensive machines.

EP-A-0 243 965 discloses a multilayered film useful for packaging vegetables and fruits. The film has a base layer A and at least one surface layer B containing an anti-fogging agent. The base layer A is a mixture of 1) one or more copolymers of alpha-olefins having 2 to 10 carbon atoms and 2) one or more copolymers containing monomer units selected from vinyl acetate, acrylic acid and styrene and other copolymerisable monomer units such as ethylene, propylene, acrylates, butadiene and the like. Random or block copolymers of 2 or more alpha-olefins having 2 to 10 carbon atoms are preferred for producing the surface layer(s) B). This film is designed for producing bags. Furthermore, the disclosed teaching is so broad and unspecific with respect to the polymers in the multilayered film that the skilled artisan does not learn what type of polymer are to be selected in order to produce a film which is useful for wrapping food instead of producing bags.

Accordingly, it would be desirable to provide new multilayered films which are useful for packaging food products, in particular fresh food such as meat, fish, cheese, vegetables and fruit. In particular, it would be desirable to provide such films which do not require expensive blending techniques or equipment when manufacturing them.

It would also be desirable to provide films which can be wrapped around the food in automatic packaging machines in particular in high speed packaging machines. Furthermore, it would be desirable to provide films with good puncture resistance and deformation recovery properties. A high puncture resistance is for example important when packaging meat with bones. Good deformation recovery properties are very important for films which will be used as a packaging material for food. Typically the food is sold in self- service shops where many customers touch the packages. By touching the film it is deformed at several spots. When the food is wrapped in films having insufficient deformation recovery properties the packaged food looks unfresh after a short time and often cannot be sold anymore.

One aspect of the invention is a coextruded cast multilayered film having a base layer (A) of which the film-forming component is at least one copolymer of A1) ethylene and A2) an ethylenically unsaturated carboxylic acid or an ionomer thereof and

at least one surface layer (B) of which the film-forming component is an ethylene homopolymer or a copolymer of ethylene and at least one alpha-olefin having from 3 to 12 carbon atoms or a blend of said polymers,

the weight of the base layer (A) being from 25 to 75 percent by the total weight of (A) and (B) and the overall thickness of the multilayered film being from 5 to 40 $\mu$m.

A further aspect of the present invention is a process for producing the coextruded cast multilayered film by coextruding or in-line laminating the base layer (A) and at least one surface layer (B).

Yet another aspect of the present invention is the use of the multilayered film for wrapping food.

Yet another aspect of the present invention is a method of packaging food with the multilayered film of the present invention wherein the film is wrapped around the food and then sealed, preferably by heat.

## Detailed description of the Invention

The coextruded cast multilayered film has a base layer (A) and at least one surface layer (B). The weight of the base layer (A) is from 25 to 75 percent, preferably from 30 to 70 percent and more preferably from 40 to 60 percent of the total weight of (A) and (B). If the multilayered film has more than one surface layer (B), the total weight of the surface layers has to be chosen in such a manner that the above mentioned weight ratios are met. Most preferably, the multilayered film has two surface layers (B) which cover both surfaces of base layer (A).

The film-forming component of base layer (A) is at least one copolymer of A1) ethylene and A2) an ethylenically unsaturated carboxylic acid or an ionomer thereof. By "film- forming component" is meant that the base layer may contain known additives such as slip or anti-block agents or tackifiers, however, that the copolymer of ethylene and an ethylenically unsaturated carboxylic acid is not mixed with substantial amounts of other polymers such as polyethylene. By "substantial amounts" are meant amounts which can influence the properties of the film. The mentioned known additives may be useful for facilitating the production of the multilayered film. When the multilayered film of the present invention only contains one surface layer (B), it may be useful to include a known anti-fogging agent into the base layer (A). In general, the copolymer of A1) and A2) is not mixed with any amounts of other types of polymers. The copolymer in base layer (A) preferably contains in copolymerised form from 75 to 98 percent, more preferably from 85 to 97 percent and most preferably from 90 to 95 percent of a A1) ethylene and preferably from 2 to 25 percent, more preferably from 3 to 15 percent and most preferably from 5 to 10 percent of A2) an ethylenically unsaturated carboxylic acid or an ionomer hereof, based on the total weight of A1) and A2). Ethylenically unsaturated monocarboxylic acids are preferred of which acrylic acid and methacrylic acid are particularly preferred. Acrylic acid is the most preferred comonomer in base layer (A). A portion or all of the ethylenically unsaturated carboxylic acid may have been converted into an ionomer thereof by treatment with a basic material. Preferred ionomers are alkali metal ionomers such as sodium ionomer, alkaline earth metal ionomers such as magnesium and the zinc ionomers. The density of the copolymer(s) in base layer (A) generally is from 0.91 g/cm$^3$ to 0.95 g/cm$^3$, preferably from 0.92 g/cm$^3$ to to 0.94 g/cm$^3$, measured according to ASTM method D-792. The melt index preferably is from 0.1 g/10 min. to 30 g/10 min., more preferably from 1 g/10 min. to 20 g/10 min., measured according to ASTM method D-1238, condition (E). The base layer (A) may contain more than one type of copolymers of A1) ethylene and A2) an ethylenically unsaturated carboxylic acid or an ionomer thereof. However, when using a blend of such copolymers it is recommended that all copolymers contain the same copolymerised monomer A2). Blending such polymers

is not difficult and does not require expensive blending equipment. Most preferably, base layer (A) contains only one type of film- forming polymer. A blending step can be avoided and the films having a base layer (A) which contains only one type of film-forming polymers have surprisingly good deformation recovery properties.

The copolymer(s) in base layer (A) can be prepared by methods well known in the art. Typically it is produced by a gas phase polymerisation process in a high pressure autoclave. The base layer (A) may contain a mixture of different copolymers of A1) and A2).

Exemplary of ethylene homopolymers which are useful in the surface layer(s) (B) are the known high, medium and low density homopolymers of ethylene. Useful ethylene copolymers preferably contain ethylene in a predominant amount, more preferably 80 percent or more, most preferably from 80 to 95 percent and preferably a minor amount, more preferably up to 20 percent, most preferably 5 to 20 percent, of at least one alpha-olefin having from 3 to 12, preferably from 4 to 8, carbon atoms per alpha-olefin molecule. Mixtures of different ethylene homopolymers and copolymers of ethylene and at least one alpha-olefin are also useful. Using mixtures requires an additional blending step which is preferably avoided although it does not create major problems. These polymers in surface layer(s) (B) preferably have melt indexes, as determined by ASTM method D-1238 (190 °C/2.16 kg) in the range of from 0.1 g/10 min. to 50 g/10 min. and densities, as determined by ASTM method D-792, in the range of from 0.880 $g/cm^3$ to 0.990 $g/cm^3$. Methods for the preparation of such polymers are well known in the art, for example as taught by Schildknecht, Polymer Processes Vol. X (1956) or in Chem. Eng. News, 5 December 1977.

Preferred polymers in the surface layer(s) (B) are linear low density polyethylenes.

By "linear low density polyethylene" (LLDPE) is meant normally solid ethylene polymers suitable for extrusion, casting, moulding or similar fabrication produced by polymerization of ethylene with up to 25 percent by weight of the polymer of at least one alphaolefin having from 3 to 12, preferably 4 to 8, carbon atoms per olefin molecule.

The LLDPE copolymers preferably used in the surface layer(s) (B) are those which are for example prepared using coordination catalysts, e.g., the well known Ziegler, Natta or Phillips catalysts. This includes those made at low, intermediate or high pressures. These ethylene polymers contain up to 25 percent, preferably from 5 to 15 percent, more preferably from 5 to 10 percent, by weight of at least one alpha-olefin comonomer which is preferably selected from the group consisting of propylene, 1-butene, 1-isobutene, 4-methyl-1-pentene, 1-pentene, 1-isopentene, 1-hexene, 1-isohexene, 1-heptene, 1-isoheptene, 1-octene, 1-isooctene, 1-nonene, 1-isononene, 1-decene and 1-isodecene. 1-Hexene, 4-methyl-1-pentene, 1-butene, propylene and in particular 1-octene are the most preferred comonomers. The amount of comonomers used should generally be enough to result in polymer densities in the low range of 0.880 to 0.935 $g/cm^3$, preferably from 0.890 to 0.920 $g/cm^3$. The copolymers generally have a high molecular weight and have a melt index (melt flow) in the range of 0.1 to 30 dg/min, preferably of from 0.1 to 20 dg/min. as measured by ASTM-D-1238 condition (E). These LLDPE polymers are recognised in the art as having excellent strength, resistance to tear propagation and exhibit good resistance to tearing or puncturing. This performance of the LLDPE polymers is especially important in food packaging applications and most especially in packaging of meat.

By "linear low density polyethylene" are also meant terpolymers of ethylene, an alpha-olefin having 3 or 4 carbon atoms and an alpha-olefin having 5 to 12 carbon atoms per molecule which terpolymers are disclosed in EP-A-010428. The alpha-olefin having 3 or 4 carbon atoms to be terpolymerized with ethylene is propylene or butene-1. Examples of the alpha-olefin having 5 to 12 carbon atoms include 1-pentene, 1-hexene, 4-methyl-1-pentene, 3-methyl-1-pentene, 1-heptene, 1-octene, 1-decene and 1-dodecene of which 1-octene is preferred. The terpolymer is preferably produced of 90 to 99.5 mol percent, more preferably 92 to 99 mol percent, of ethylene, 0.2 to 9.8 mol percent, more preferably 0.3 to 7 mol percent, of the alpha-olefin having 3 or 4 carbon atoms, and 0.2 to 9.8 mol percent, more preferably 0.3 to 7 mol percent, of the alpha-olefin having 5 to 12 carbon atoms. The linear ethylene polymers having polymer densities in the range of 0.880 $g/cm^3$ to 0.920 $g/cm^3$ are usually referred to as linear very low density polyethylene (VLLDPE). The density of the polymer can be chosen according to the preferred properties of the multilayered film. Generally at higher densities the mechanical strength increases and at lower densities the elastic recovery increases. The surface layer(s) (B) can have more than one type of the described polymers, however, preferably each surface layer only contains one type of the described polymers. If the multilayered film contains more than one surface layer (B), the polymer need not be the same in all the surface layers (B). For example, the multilayered film may consist of three layers, of which the first surface layer (B) contains a linear very low density polyethylene having a density between 0.880 $g/cm^3$ and 0.920 $g/cm^3$ which results in good mechanical properties such as elastic recovery and tear resistance, the base layer (A) contains the above described polymers and the second surface layer (B) contains a linear low

density polyethylene having a density between 0.920 g/cm$^3$ and 0.935 g/cm$^3$ which provides the film with the desired stiffness. The surface layer(s) (B) may also contain a mixture of one or more linear (very) low density polyethylenes and a known low density polyethylene for improving the tearability of the multilayered film.

The expression " film-forming component" referring to surface layer (B) is defined in the same way as said expression referring to the base layer (A). In addition to the film-forming component the surface layer-(s) (B) may contain optional additives such as stabilisers, anti-oxidants or lubricants. In some cases it may be useful to incorporate an anti-fogging agent in one or all surface layers (B). Addition of an anti-fogging agent is particularly recommended when the multilayered film will be used for packaging material of a high water content such as fruits or meat in order to prevent a condensate of small water droplets on the surface of the film which faces the packaged food. Useful anti-fogging agents are known. Preferred types of anti-fogging agents are compounds of Formula I

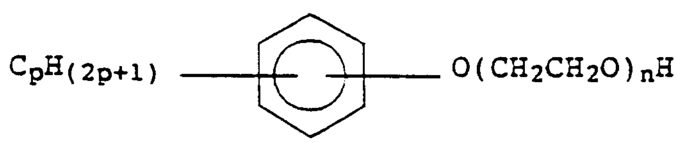

(I)

wherein n is an average number of 3 to 8 and p is 9 or 10. The surface layer (B) generally contains from 0.8 to 5 percent by weight of the anti-fogging agent. When a compound of Formula I is used, an amount of from 0.1 to 1.0 percent, preferably of from 0.4 to 0.8 percent by weight of the surface layer (B) is usually sufficient.

It may also be useful to include a cling additive such as a fatty acid ester or a polyisobutylene or another known cling additive in the surface layer (B), generally in an amount of 0.1 to 5 percent by weight of the surface layer (B).

The overall thickness of the multilayered film is from 5 to 40 micrometers, preferably from 10 to 20 micrometers, more preferably from 13 to 17 micrometers. Preferably the ratio of the thickness of the base layer (A) to the total thickness of the surface layer(s) (B) is from 0.5:1 to 2:1, more preferably from 0.75:1 to 1.3:1. Although there is no limitation of thickness of each layer, it is preferred that the thickness of the base layer (A) is from 5 to 10 micrometers, more preferably from 6 to 9 micrometers and the thickness of each surface layer (B) is from 2 to 6 micrometers, more preferably from 3.0 to 4.5 micrometers.

The multilayered films of the present invention can be prepared in a known way by coextruding or in-line laminating the base layer (A) and at least one surface layer (B). The production of blown and cast films is generally known. When producing the multilayered films by in-line laminating the base layer (A) and at least one surface layer (B) it may be useful to include an adhesive layer between the base layer (A) and the surface layer(s) (B). Useful components for adhesive layers are known. In general, the multilayered films of the present invention do not contain an adhesive layer. Preferably, cast films are produced by coextruding layers (A) and (B) through a flat dye. Most preferably, the produced multilayered film has a sequence of layers B / A / B. Further preferred multilayered films have the sequence B/A/B/A, B/A/B/A/B, B/A/B/A/B/A or B/A//B/A/B/A/B and so on. Typically the multilayered film is coextruded at a temperature of from 180°C to 280°C, preferably of from 240°C to 260°C.

The multilayered films of the present invention have a high puncture resistance and good deformation recovery properties.

A further aspect of the present invention is the use of the multilayered film of the present invention for wrapping food. According to one method the food may be wrapped by hand with the multilayered film of the present invention. Preferably, the method of wrapping food with the multilayered film is carried out automatically. According to this method the food is placed in a container or on a tray, the film of the present invention is automatically wrapped around the container or the tray and is sealed, for example by applying heat. According to a preferred embodiment of this method the packaging machine is equipped with a roll of the multilayered film of the present invention. A portion of the film is unrolled and cut while being held by a spreading device. The container or tray having the food is then brought into contact with the film; preferably it is pushed upwards from beneath towards the film. The film is then wrapped around the container or the tray, preferably in such a way that the ends of the film piece contact each other below the container or tray.

The ends of the film piece are then sealed together, for example by heat sealing. Heat sealing can be carried out by contacting the bottom of the container or of the tray with a heated plate.

For sealing the films of the present invention the films preferably are heated to a temperature between 80 °C and 180 °C, more preferably between 140 °C and 160 °C.

The multilayered film of the present invention is useful for automatic packaging. Trials to automatically package food with a film produced of an ethylene homopolymer or a copolymer of ethylene and an alpha-olefin only have not shown satisfactory results. The use of the film of the present invention in a process for automatically wrapping food is very advantageous since the wrapping machine can be run at a high speed. Generally the machine can be run at such a speed that from 25 to 180, preferably from 80 to 120 containers or trays can be wrapped with the film per minute.

The invention is further illustrated by the following Examples which should not be construed to limit the scope of the invention. All parts and percentages are by weight unless otherwise mentioned.

The following polymers and additives are used for producing the multilayered films:

- an ethylene/acrylic acid copolymer (EAA-1) containing 9 weight percent copolymerised acrylic acid and having a melt index of 1.5 g/10 min. and a density of 0.938 g/$cm^3$;
- an ethylene/acrylic acid copolymer (EAA-2) containing 9 weight percent copolymerised acrylic acid and having a melt index of 3.0 g/10 min. and a density of 0.938 g/$cm^3$;
- an ethylene/acrylic acid copolymer (EAA-3) containing 9 weight percent copolymerised acrylic acid and having a melt index of 5.0 g/10 min. and a density of 0.938 g/$cm^3$;
- a linear low density polyethylene (LLDPE-1) having a nominal content of copolymerised 1-octene of 7 - 8 weight percent, a melt index of 3.3 g/10 min. and a density of 0.917 g/$cm^3$;
- a linear low density polyethylene (LLDPE-2) having a nominal content of copolymerised 1-octene of 7 - 8 weight percent, a melt index of 2.3 g/10 min. and a density of 0.917 g/$cm^3$;
- a linear low density polyethylene (LLDPE-3) having a nominal content of copolymerised 1-octene of 6 - 7 weight percent, a melt index of 6.0 g/10 min. and a density of 0.919 g/$cm^3$;
- a linear very low density polyethylene (VLLDPE-1) having a nominal content of copolymerised 1-octene of 10 - 11 weight percent, a melt index of 2.0 g/10 min. and a density of 0.912 g/$cm^3$;
- a linear very low density polyethylene (VLLDPE-2) having a nominal content of copolymerised 1-octene of 11 - 12 weight percent, a melt index of 7.0 g/10 min. and a density of 0.910 g/$cm^3$;

The octene content in LLDPE-1, LLDPE-2, LLDPE-3, VLLDPE-1 and VLLDPE-2 is determined according to ASTM D-2238, Method B.

In all Examples and in Comparative Examples A and B a three layer film is produced by flat dye extrusion at a melt temperature between 240 °C to 280 °C and at a line speed of 150 m/min. The thickness of the film in all Examples and in Comparative Examples A and B is between 14 and 16 micrometers. The thickness of the base layer (A) is about 7 to 8 micrometers and the thickness of each surface layers (B) is about 4 micrometers. In each Example and in Comparative Examples A and B a film structure / A / B / A / is produced wherein the weight percentage of the layers is 25 / 50 / 25.

In Comparative Example C a commercially available monolayered polyvinylchloride film having a thickness of 14 micrometers is used.

The physical properties of the produced films listed in the following tables are measured as follows:

- dart drop impact (g): ASTM D-1709
- Elmendorf tear strength (g): ASTM D-1922
  "MD" means: machine direction
  "CD" means: cross direction.

The recovery (%) and the puncture energy (J) are measured as described below:

a) Recovery

A tensile test machine JJ Type T 500 is used which is equipped with a probe of 12.5 mm diameter having a hemispherical tip of polytetrafluoroethylene. A film sample is changed with a clamping ring having an inner diameter of 125 mm. The probe is lowered until it just touches the film samples (starting position). The probe is then further lowered to a depth of 25 mm at a rate of 100 mm/min. whereby the film sample is deformed. A force/deflection curve is recorded. The deflection is recorded on the x-axis.

The probe is then withdrawn from the film sample at a rate of 100 mm/min. until it reaches its starting position. One minute after the withdrawal of the probe has commenced, the probe is relowered at the same rate to the same depth and a second force/deflection curve is recorded. The separation of the first and the second curve on the x-axis is due to the additional movement of the probe to contact the surface of the film that has not entirely recovered after the first deflection of 25 mm. The distance x between the two curves is

always measured at a force of 1 Newton. From the distance x between the two curves the actual difference between the movement of the probe in the second run and in the first run is determined and the recovery in percent is calculated, based on this difference and on the total deflection (25 mm).

b) Puncture resistance (puncture energy)

The same clamping system is used but an aluminium probe having a diameter of 12.5 mm and a hemispherical tip having a radius of 6.25 mm is used. The probe is lowered at a rate of 500 mm/min. whereby the film sample is deformed.

The puncture energy in Joules to break the film is recorded.

Examples 1 to 3 an Comparative Example A

| Film structure | Example 1<br>LLDPE-1/EAA-2/LLDPE-1 | Example 2<br>LLDPE-1/EAA-1/LLDPE-1 | Example 3<br>LLDPE-1/EAA-3/LLDPE-1 | Comp. Example A<br>LLDPE-1/VLLDPE-1/LLDPE-1 |
|---|---|---|---|---|
| Dart drop impact (g) | - | 108 | 93 | 143 |
| Elmendorf tear resistance (g) | MD 224 CD 40 | MD 243 CD 26 | MD 201 CD 82 | MD 185 CD 293 |
| Puncture energy (J) | 0.74 | 0.65 | 0.60 | 0.89 |
| Recovery (%) | 91 | 91 | 94 | 84 |

Table I

Table I illustrates that a multilayered film wherein a copolymer of ethylene and at least one alpha-olefin having from 3 to 12 carbon atoms is used as a film-forming component of the base layer (A) has a considerably lower recovery than the films of the present invention which have the same surface layers (B)

but which contain a copolymer of A1) ethylene and A2) an ethylenically unsaturated carboxylic acid as a film-forming component of the base layer (A).

The films of Examples 1 to 3 were subjected to packaging trials with commercially available packaging machines. The used packaging machines and the results of the trials are listed in Table II:

Table II

| Example | Used machine/results |
| --- | --- |
| 1 | An Automac 44 machine; 40 packages were wrapped. The film could easily be cut in CD, sealed well and showed an excellent recovery. |
| 2 | A Chick machine; trays having 3 or 4 apples were packed. The film could easily be cut in CD, sealed well and showed an excellent recovery. |
| 3 | An Automac 44 machine; 300 trays having 4 or 5 apples were packed. The film could easily be cut in CD, sealed well and showed an excellent recovery and strength. |
| Comparative Example A | An Automac 44 machine; trays having 4 or 5 apples were packed. The film could easily be cut in CD, sealed well and showed a good film strength. However, the recovery of the film was insufficient. |

The results of the packaging trials listed in Table II confirm the measurements of the physical properties listed in Table I.

Table III

Examples 4 and 5 and Comparative Examples B and C

| Film structure | Example 4 LLDPE-3/EAA-1/LLDPE-3 | Example 5 LLDPE-3/EAA-3/LLDPE-3 | Comp. Example B LLDPE-3/VLLDPE-2/LLDPE-3 | Comp. Example C PVC |
|---|---|---|---|---|
| Dart drop impact (g) | 86 | 105 | 85 | 252 |
| Elmendorf tear resistance (g) | MD 138 CD 45 | MD 163 CD 151 | MD 261 CD 469 | MD 26 CD 46 |
| Puncture energy (J) | 0.47 | 0.71 | 0.81 | 0.33 |
| Recovery (%) | 93 | 93 | 91 | 95 |

The puncture resistance (punture energy) of the films of all Examples is considerably higher than the puncture resistance of the PVC film of Comparative Example C.

Besides the physical properties of the films their behaviour in wrapping trials on a high speed machine Automac 44 was evaluated. Trays with 4 or 5 apples were wrapped with the film. The films of Examples 4 and 5 and Comparative Example B could easily be cut in CD and sealed well.

The film of Example 4 exhibited excellent recovery and strength.

The film of Example 5 exhibited excellent recovery but split in the machine direction in numerous cases.

The film of Comparative Example B exhibited insufficient recovery.

The comparison between Examples 4 and 5 shows that the evaluation of the Elmendorf tear resistance is not necessarily sufficient for predicting which film is the most useful one for automatic food wrapping on a given machine under given conditions such as machine speed and force of the spreading device. Although the film of Example 5 has a higher Elmendorf tear resistance than the film of Example 4, the film of Example 4 showed a higher strength in the food wrapping trial than the film of Example 5. This difference is believed to be due to the different testing conditions, i.e. a testing of a substantially motionless film versus a testing of a film running at a high speed on a packaging machine.

Example 6

| Film structure | LLDPE-3/EAA-2/LLDPE-3 | | |
|---|---|---|---|
| Dart drop impact (g) | | 170 | |
| Elmdendorf tear resistance (g) | MD 181 | | CD 51 |
| Puncture energy (J) | | 0.80 | |
| Recovery (%) | | 88.0 | |

Two different film samples having the structure of the film of Example 6 were tested on a an Automac 44 machine as described in Example 1. The film samples could easily be cut in cross direction, sealed well and showed a good recovery and strength.

Examples 7 to 9

The same film structures as those in Example 1, 2 and 6 are prepared, their physical properties are measured and their usefulness for automatic food wrapping is determined as in Examples 1, 2 and 6. However, the time period between the production and the measurements of the films having the same structure (Examples 1/7, Examples 2/8 and Examples 6/9) is several months. Because of slightly different production and test conditions, such as different temperatures, different resin batches and so on, the results of the physical properties are not the same when measuring above mentioned individual films having the same structure. However, Examples 7 to 9 also confirm the superior recovery properties of the films of the present invention compared with the film of Comparative Example A (see Table IV) and the usefulness of the films of the present invention for automatic food wrapping (see Table V).

## Examples 7 to 9

| Film structure | Example 7<br>LLDPE 1/EAA-2/LLDPE-1 | | Example 8<br>LLDPE 1/EAA 1/LLDPE 1 | | Example 9<br>LLDPE 3/EAA 2/LLDPE 3 | |
|---|---|---|---|---|---|---|
| Dart drop impact (g) | 157 | | 174 | | 185 | |
| Elmendorf tear resistance (g) | MD<br>149 | CD<br>26 | MD<br>240 | CD<br>28 | MD<br>70 | CD<br>35 |
| Puncture energy (J) | 0.75 | | 0.66 | | 0.75 | |
| Recovery (%) | 95.1 | | 94.0 | | 88.5 | |

Table IV

Table V

| Example | Used machine/results |
|---|---|
| 7 | Chick machine; trays having 3 or 4 apples were packed. The film could easily be cut in CD, sealed well and showed an excellent recovery. |
| 8 | An Automac 44 machine; trays having 4 or 5 apples were packed. The film could easily be cut in CD, sealed well and showed an excellent recovery and strength. |
| 9 | Chick machine; trays having 3 or 4 apples were packed. The film could easily be cut in CD, sealed well and showed a good recovery and strength. |

## Claims

**1.** A coextruded cast multilayered film containing a base layer (A) of which the film-forming component is at least one copolymer of A1) ethylene and A2) an ethylenically unsaturated carboxylic acid or an ionomer thereof and at least one surface layer (B) of which the film-forming component is an ethylene homopolymer or a copolymer of ethylene and at least one alpha-olefin having from 3 to 12 carbon atoms, or a blend of said polymers,
the weight of the base layer (A) being from 25 to 75 percent by the total weight of (A) and (B) and the overall thickness of the multilayered film being from 5 to 40 micrometers.

**2.** The multilayered film of claim 1 wherein the weight of the base layer (A) is from 30 to 70 percent by the total weight of (A) and (B).

**3.** The multilayered film of claim 1 or 2 wherein the film- forming component of the base layer (A) is a copolymer of A1) ethylene and A2) acrylic or methacrylic acid or an alkali or alkaline earth metal ionomer of acrylic or methacrylic acid.

**4.** The multilayered film of claim 3 wherein copolymer (A) contains from 2 to 25 weight percent of copolymerised monomer A2).

**5.** The multilayered film of any one of claims 1 to 4 wherein the film-forming component of the surface layer(s) (B) is a copolymer of ethylene and up to 25 weight percent of an alpha-olefin having from 3 to 12 carbon atoms, the copolymer having a density of 0.880 to 0.935 g/cm$^3$.

**6.** The multilayered film of any one of claims 1 to 5 having two surface layers (B).

**7.** The multilayered film of any one of claims 1 to 6 wherein the film-forming component of the surface layer(s) (B) is a copolymer of ethylene and 1-octene wherein the amount of copolymerised 1-octene is 5 to 15 percent by polymer weight
and the film-forming component of the base layer (A) is a copolymer of ethylene and acrylic acid wherein the amount of copolymerised acrylic acid is 5 to 10 percent by polymer weight and
the weight of the base layer (A) is from 40 to 60 percent by the total weight of (A) and (B).

**8.** The multilayered film of any one of claims 1 to 7 wherein the surface layer(s) (B) contain an anti-fogging agent at an amount of 0.1 to 5 percent by weight of the surface layer(s) (B) or a cling additive at an amount of 0.1 to 5 percent by weight of the surface layer(s) (B) or both.

**9.** The multilayered film of any one of claims 1 to 8 wherein the overall thickness of the multilayered film is from 10 to 20 micrometers.

**10.** The multilayered film of any one of claims 1 to 9 wherein the ratio of the thickness of the base layer (A) to the total thickness of the surface layer(s) (B) is from 0.5:1 to 2:1.

**11.** A process for producing the multilayered film of any of claims 1 to 9 by coextruding the base layer (A) and at least one surface layer (B).

12. A method of packaging food with the multilayered film of any one of claims 1 to 10 wherein the film is wrapped around the food and then sealed.

13. The method of claim 12 wherein the food is placed in a container or on a tray, the film is automatically wrapped around the container or the tray and then sealed.

**Patentansprüche**

1. Coextrudierte flache Mehrschichtfolie mit einer Grundschicht (A), deren filmbildende Komponente mindestens ein Copolymer von A1) Ethylen und A2) einer ethylenisch ungesättigten Carbonsäure oder einem Ionomer davon ist, und mit mindestens einer Deckschicht (B), deren filmbildende Komponente ein Ethylenhomopolymer oder ein Copolymer von Ethylen und von mindestens einem Alpha-Olefin mit 3 bis 12 Kohlenstoffatomen oder eine Mischung dieser Polymere ist, wobei das Gewicht der Grundschicht (A) zwischen 25 und 75 % des Gesamtgewichtes von (A) und (B) beträgt und die Gesamtdicke der Mehrschichtfolie zwischen 5 und 40 µm ist.

2. Mehrschichtfolie nach Anspruch 1, wobei das Gewicht der Grundschicht (A) zwischen 30 und 70 % des Gesamtgewichtes von (A) und (B) beträgt.

3. Mehrschichtfolie nach Anspruch 1 oder 2, wobei die filmbildende Komponente der Grundschicht (A) ein Copolymer von A1) Ethylen und A2) Acrylsäure oder Methacrylsäure oder einem Alkali- oder Erdalkalimetall-Ionomer von Acryl- oder Methacrylsäure ist.

4. Mehrschichtfolie nach Anspruch 3, wobei das Copolymer (A) zwischen 2 und 25 Gew.-% des copolymerisierten Monomers A2) enthält.

5. Mehrschichtfolie nach einem der Ansprüche 1 bis 4, wobei die filmbildende Komponente der Deckschicht(en) (B) ein Copolymer von Ethylen und bis zu 25 Gew.-% von einem Alpha-Olefin mit 3 bis 12 Kohlenstoffatomen ist, wobei das Copolymer eine Dichte von 0,880 bis 0,935 g/cm$^3$ aufweist.

6. Mehrschichtfolie nach einem der Ansprüche 1 bis 5, welche zwei Deckschichten (B) aufweist.

7. Mehrschichtfolie nach einem der Ansprüche 1 bis 6, wobei die filmbildende Komponente der Deckschicht(en) (B) ein Copolymer von Ethylen und 1-Octen ist, wobei die Menge an copolymerisiertem 1-Octen 5 bis 15 % des Polymergewichtes beträgt, und die filmbildende Komponente der Grundschicht (A) ein Copolymer von Ethylen und Acrylsäure ist, wobei der Anteil an copolymerisierter Acrylsäure 5 bis 10 % des Polymergewichtes beträgt, und das Gewicht der Grundschicht (A) 40 bis 60 % des Gesamtgewichtes von (A) und (B) beträgt.

8. Mehrschichtfolie nach einem der Ansprüche 1 bis 7, wobei die Deckschicht(en) (B) ein Beschlagsverhinderungsmittel mit einer Menge von 0,1 bis 5 Gew.-% der Deckschicht(en) (B), oder einen Haftzusatz in einer Menge von 0,1 bis 5 Gew.-% der Deckschicht(en) (B) oder beide enthalten.

9. Mehrschichtfolie nach einem der Ansprüche 1 bis 8, wobei die Gesamtdicke der Mehrschichtfolie 10 bis 20 µm beträgt.

10. Mehrschichtfolie nach einem der Ansprüche 1 bis 9, wobei das Verhältnis der Dicke der Grundschicht (A) zur Gesamtdicke der Deckschicht(en) (B) 0,5:1 bis 2:1 beträgt.

11. Verfahren zur Herstellung einer Mehrschichtfolie nach einem der Ansprüche 1 bis 9 durch Coextrusion der Grundschicht (A) und mindestens einer Deckschicht (B).

12. Verfahren zur Verpackung von Lebensmitteln mit einer Mehrschichtfolie nach einem der Ansprüche 1 bis 10, wobei die Folie um das Lebensmittel gewickelt und dann versiegelt wird.

13. Verfahren nach Anspruch 12, wobei das Lebensmittel in einen Behälter oder in eine Schale gegeben wird, die Folie automatisch um den Behälter oder um die Schale gewickelt und dann versiegelt wird.

**Revendications**

1. Film multicouche coulé coextrudé comportant
une couche de base (A) dont le composant constituant le film est au moins un copolymère d'éthylène (A1) et d'un acide carboxylique à insaturation éthylénique (A2) ou une forme ionisée de celui-ci, et
au moins une couche de surface (B) dont le composant constituant le film est un homopolymère d'éthylène ou un copolymère d'éthylène et d'au moins une α-oléfine comportant de 3 à 12 atomes de carbone, ou un mélange desdits polymères,
la masse de la couche de base (A) représentant de 25 à 75 % de la masse totale de (A) et (B) et l'épaisseur globale du film multicouche étant comprise entre 5 et 40 µm.

2. Film multicouche conforme à la revendication 1 dans lequel la masse de la couche de base (A) est comprise entre 30 et 70 % de la masse totale de (A) et (B).

3. Film multicouche conforme à la revendication 1 ou 2 dans lequel le composant constituant le film de la couche de base (A) est un copolymère d'éthylène (A1) et d'acide (méth)acrylique ou de (méth)acrylate de métal alcalin (A2).

4. Film multicouche conforme à la revendication 3 dans lequel le copolymère (A) contient de 2 à 25 % en poids du monomère copolymérisé (A2).

5. Film multicouche conforme à une quelconque des revendications 1 à 4 dans lequel le composant constituant le film de la ou des couche(s) de surface (B) est un copolymère d'éthylène et de jusqu'à 25 % en poids d'une α-oléfine comportant de 3 à 12 atomes de carbone, le copolymère ayant une masse volumique comprise entre 0,880 et 0,935 g/cm$^3$.

6. Film multicouche conforme à une quelconque des revendications 1 à 5 comportant des couches de surface (B).

7. Film multicouche conforme à une quelconque des revendications 1 à 6 dans lequel le composant constituant le film de la ou des couche(s) de surface (B) est un copolymère d'éthylène et de 1-octène, la quantité de 1-octène copolymérisé étant comprise entre 5 et 15 % en poids du polymère, et le composant constituant le film de la couche de base (A) est un copolymère d'éthylène et d'acide acrylique dans lequel la quantité d'acide acrylique copolymérisé est comprise entre 5 et 10% en poids du polymère, la masse de la couche de base (A) représentant de 40 à 60 % de la masse totale de (A) et (B).

8. Film multicouche conforme à une quelconque des revendications 1 à 7 dans lequel la ou les couche(s) de surface (B) contien(nen)t un agent antibuée à raison de 0,1 à 5 % en poids par rapport à la ou les couche(s) de surface (B) ou un agent d'adhésion à raison de 0,1 à 5 % en poids de la ou des couche-(s) de surface (B) ou les deux.

9. Film multicouche conforme à une quelconque des revendications 1 à 8 dans lequel l'épaisseur globale du film multicouche est de 10 à 20 µm.

10. Film multicouche conforme à une quelconque des revendications 1 à 9 dans lequel le rapport de l'épaisseur de la couche de base (A) à l'épaisseur globale de la ou des couche(s) de surface (B) est compris entre 0,5:1 et 2:1.

11. Procédé de préparation d'un film multicouche conforme à une quelconque des revendications 1 à 9 par extrusion de la couche de base (A) et d'au moins une couche de surface (B).

12. Procédé d'emballage de produits alimentaires avec le film multicouche conforme à une quelconque des revendications 1 à 10 dans lequel le film est disposé autour des aliments et ensuite scellé.

13. Procédé conforme à la revendication 12 dans lequel l'aliment est placé dans un récipient ou sur un plateau, le film est disposé autour du récipient ou du plateau et est scellé par un procédé automatisé.